# EUROPÄISCHE PATENTSCHRIFT

(11) **EP 4 703 673 B1**
(45) Veröffentlichungstag und Bekanntmachung des Hinweises auf die Patenterteilung: **14.10.2026**
(21) Anmeldenummer: 24197209.0
(22) Anmeldetag: 29.08.2024
(51) Int. Cl.: G01B 7/004, G01D 5/20

(54) **INDUKTIVE POSITIONSMESSEINRICHTUNG UND VERFAHREN ZUM BETREIBEN EINER INDUKTIVEN POSITIONSMESSEINRICHTUNG**
INDUCTIVE POSITION MEASURING DEVICE AND METHOD FOR OPERATING AN INDUCTIVE POSITION MEASURING DEVICE
DISPOSITIF DE MESURE DE POSITION INDUCTIF ET PROCÉDÉ DE FONCTIONNEMENT D'UN DISPOSITIF DE MESURE DE POSITION INDUCTIF

(43) Veröffentlichungstag der Anmeldung: 04.03.2026
(73) Patentinhaber: Dr. Johannes Heidenhain GmbH, 83301 Traunreut (DE)
(72) Erfinder: ECKART, Matthias, 83454 Anger (DE); HEINEMANN, Christoph, 83236 Übersee (DE); TIEMANN, Marc Oliver, 83329 Waging am See (DE)

(56) Entgegenhaltungen:
- WO-A1-2020/088869
- DE-A1- 102020 205 398
- DE-U1- 20 120 658
- US-A1- 2015 012 242

## Beschreibung

### GEBIET DER TECHNIK

Die Erfindung betrifft eine induktive Positionsmesseinrichtung gemäß dem Oberbegriff des Anspruchs 1 sowie ein Verfahren zum Betreiben einer induktiven Positionsmesseinrichtung gemäß dem Oberbegriff des Anspruchs 11.

### STAND DER TECHNIK

Aus der Patentschrift WO 2020 088 869 A1 ist eine Bewegungsvorrichtung mit einem Positionsbestimmungssystem bekannt, welche eine statische und eine bewegte Baugruppe besitzt. Beide Baugruppen verfügen über eine eigene Stromversorgung und umfassen mehrere kreisförmig ausgebildete Spulen oder Kondensatorplatten, welche miteinander elektromagnetisch wechselwirken.

Nachteilhaft am vorgenannten Stand der Technik ist, dass sowohl die bewegte als auch die unbewegte Baugruppe elektrische Bauelemente nutzt, die an eine aktive Elektronik angeschlossen werden müssen. Dies hat zur Folge, dass jede Baugruppe eine eigene Stromversorgung und eine eigene Datenverbindung benötigt, was insbesondere bei der stationären Baugruppe zu einem deutlich komplexeren Aufbau führt.

Eine induktive Positionsmesseinrichtung nach dem Oberbegriff des Anspruchs 1 ist auch aus der Offenlegungsschrift DE 10 2020 205 398 A1 bekannt.

### ZUSAMMENFASSUNG DER ERFINDUNG

Der Erfindung liegt die Aufgabe zugrunde eine induktive Positionsmesseinrichtung bereitzustellen, durch welche eine Positionsbestimmung einer bewegten Baugruppe in mehreren Freiheitsgraden möglich ist und die gleichzeitig kostengünstig in der Herstellung ist.

Diese Aufgabe wird erfindungsgemäß durch die Merkmale des Anspruchs 1 bzw. des Anspruchs 11 gelöst. Vorteilhafte Ausgestaltungen und Weiterbildungen sind in den jeweils abhängigen Ansprüchen angegeben.

Die erfindungsgemäße induktive Positionsmesseinrichtung umfasst eine erste Baugruppe mit einer ersten Wechselwirkungsoberfläche und eine zweite Baugruppe mit einer zweiten Wechselwirkungsoberfläche. Die beiden Baugruppen sind in einer dritten Messrichtung einander gegenüberliegend angeordnet und relativ zueinander bewegbar. Die zweite Wechselwirkungsoberfläche ist größer ausgebildet als die erste Wechselwirkungsoberfläche. Die erste Baugruppe umfasst mehrere erste Feldwechselwirkungsmittel, welche parallel zur ersten Wechselwirkungsoberfläche angeordnet sind. Die ersten Feldwechselwirkungsmittel umfassen jeweils zumindest ein Erzeugungsmittel zum Erzeugen eines elektromagnetischen Felds und zumindest ein Empfangsmittel zum Empfangen eines elektromagnetischen Felds. Die zweite Baugruppe umfasst mehrere zweite Feldwechselwirkungsmittel, welche flächig verteilt über die zweite Wechselwirkungsoberfläche angeordnet sind. Die ersten und zweiten Feldwechselwirkungsmittel sind in elektromagnetische Wechselwirkung bringbar. Die induktive Positionsmesseinrichtung ist dadurch gekennzeichnet, dass zumindest ein erstes Feldwechselwirkungsmittel entlang einer ersten Messrichtung angeordnet ist und zumindest ein zweites erstes Feldwechselwirkungsmittel entlang einer zweiten Messrichtung angeordnet ist.

Gemäß einer vorteilhaften Weiterbildung der Erfindung sind die ersten Feldwechselwirkungsmittel als längliche Linearsensoren ausgebildet und die erste und zweite Messrichtung verlaufen senkrecht zueinander.

Unter einem länglichen Linearsensor soll ein Sensor verstanden werden, der ausgebildet ist, ein elektrisches Signal in Abhängigkeit seiner Relativposition bezüglich einer der Messrichtungen sowie seinen Abstand zur zweiten Baugruppe zu erzeugen. Dabei ist der Linearsensor konstruktiv derart ausgebildet, dass seine Abmessung entlang jener Messrichtung, zu der er parallel angeordnet ist, größer ist als seine übrigen Abmessungen.

In weiter Ausgestaltung umfassen die ersten Feldwechselwirkungsmittel
- jeweils ein erstes Empfangsmittel und ein zweites Empfangsmittel, welche einen periodischen Verlauf mit einer konstanten Periodenlänge aufweisen, wobei die Empfangsmittel in der ersten oder zweiten Messrichtung um ein Viertel ihrer Periodenlänge zueinander versetzt angeordnet sind, und
- jeweils ein Erregermittel, welches die beiden Empfangsmittel, insbesondere in Form eines Vierecks, umgibt.

Mit Vorteil umfasst die erste Baugruppe vier erste Feldwechselwirkungsmittel, die in der ersten Wechselwirkungsoberfläche und jeweils senkrecht zueinander angeordnet sind.

Ist eine Ausführung mit den vier ersten Feldwechselwirkungsmitteln vorgesehen, so sind vorteilhafterweise die Empfangsmittel der vier ersten Feldwechselwirkungsmittel derart ausgebildet, dass ihre Schwingungsbreite mindestens einer Periodenlänge entspricht.

Alternativ umfasst die erste Baugruppe acht erste Feldwechselwirkungsmittel, die in der ersten Wechselwirkungsoberfläche und paarweise parallel zu Feldwechselwirkungspaaren angeordnet sind, wobei die vier Feldwechselwirkungsmittelpaare dann jeweils senkrecht zueinander angeordnet sind.

Die senkrechte Anordnung der vier Feldwechselwirkungsmittel bzw. der vier Feldwechselwirkungspaare erfolgt derart, dass jedes Feldwechselwirkungsmittel bzw. Feldwechselwirkungspaar senkrecht zu genau zwei benachbarten Feldwechselwirkungsmitteln bzw. Feldwechselwirkungspaaren verläuft, d. h. insgesamt eine Quadratanordnung durch die Feldwechselwirkungsmittel bzw. Feldwechselwirkungspaare ausgebildet wird.

Ist eine Ausführung mit den acht Feldwechselwirkungsmitteln bzw. vier Feldwechselwirkungspaaren vorgesehen, so sind vorteilhafterweise die ersten Empfangsmittel von zumindest einem der Feldwechselwirkungspaare gleich ausgebildet und seriell verschaltet. Zusätzlich sind die zweiten Empfangsmittel von zumindest einem der Feldwechselwirkungspaare gleich ausgebildet und seriell verschaltet. Die Schwingungsbreite zumindest eines der Empfangsmittel beträgt weniger als die Hälfte der Periodenlänge und der Abstand der beiden ersten Empfangsmittel bzw. der beiden zweiten Empfangsmittel innerhalb zumindest eines Feldwechselwirkungspaars beträgt die Hälfte der Periodenlänge.

Hierunter ist jener Abstand innerhalb eines Feldwechselwirkungspaars zu verstehen, der zwischen den Empfangsmitteln des einen ersten Feldwechselwirkungsmittels und den Empfangsmitteln des weiteren ersten Feldwechselwirkungsmittels bezüglich den virtuellen Nulldurchgängen ausgebildet ist.

Bevorzugt sind bei jedem der vier Feldwechselwirkungspaare die ersten Empfangsmittel gleich ausgebildet und die ersten Empfangsmittel innerhalb eines Feldwechselwirkungspaars seriell verschaltet. Ebenso sind bevorzugt bei jedem der vier Feldwechselwirkungspaare die zweiten Empfangsmittel gleich ausgebildet und die ersten Empfangsmittel innerhalb eines Feldwechselwirkungspaars seriell verschaltet.

In weiterer Ausgestaltung ist vorgesehen, dass die zweite Baugruppe nicht an eine aktive Energieversorgungseinrichtung und Datenverarbeitungseinrichtung angeschlossen ist.

Somit ist nur die erste Baugruppe an eine aktive Energieversorgungseinrichtung und Datenverarbeitungseinrichtung angeschlossen.

Mit Vorteil sind die zweiten Feldwechselwirkungsmittel
- viereckig ausgebildet, insbesondere als quadratische Flächen, und
- gleich groß und rasterartig gleichverteilt auf der zweiten Wechselwirkungsoberfläche angeordnet.

Vorteilhafterweise sind die zweiten Feldwechselwirkungsmittel mit einer planaren Technologie, insbesondere durch eine Dickschichttechnik und ergänzend oder alternativ eine Dünnschichttechnik hergestellt.

Das erfindungsgemäße Verfahren zum Betreiben einer induktiven Positionsmesseinrichtung ist dadurch gekennzeichnet, dass unter Verwendung wenigstens eines ersten Feldwechselwirkungsmittels ein vorbestimmtes Erregersignal an die zweite Baugruppe gesendet wird, wobei danach ein an wenigstens einem ersten Feldwechselwirkungsmittel anliegendes Empfangssignal gesondert gemessen wird. Durch entsprechende Signalauswertung zumindest eines Empfangssignals wird eine lineare Positionsinformation und ergänzend oder alternativ eine Abstandsinformation des zumindest einen ersten Feldwechselwirkungsmittels bezüglich der zweiten Baugruppe bestimmt.

Vorzugsweise wird das vorbestimmte Erregersignal durch zumindest ein zweites Feldwechselwirkungsmittel moduliert, bevor es als Empfangssignal durch zumindest ein Empfangsmittel gemessen wird.

Dabei wird vorzugweise das Erregersignal durch jenes Erregermittel und das Empfangssignal durch jenes Empfangsmittel erzeugt bzw. empfangen, welche zu ein und demselben Feldwechselwirkungspaar gehören und insbesondere zu ein und demselben ersten Feldwechselwirkungsmittel.

Mit Vorteil erfolgt die Modulation in Abhängigkeit der Position des zumindest einen zweiten Feldwechselwirkungsmittels auf der zweiten Wechselwirkungsoberfläche.

Vorzugsweise bestimmt die induktive Positionsmesseinrichtung die relative Lage der ersten und zweiten Baugruppe in zumindest vier Freiheitsgraden, beispielsweise in sechs Freiheitsgraden.

Bei den sechs Freiheitsgraden handelt es sich vorzugsweise um sechs räumliche Freiheitsgrade, beispielsweise um drei kartesische Ortskoordinaten und drei Euler-Winkel.

Mit Vorteil wird aus den Positionsinformationen und ergänzend oder alternativ den Abstandsinformationen der ersten Feldwechselwirkungsmittel, welche eine Positionsinformation bzw. eine Abstandsinformation bezüglich einer identischen Messrichtung bestimmen, zumindest ein erster Qualitätsparameter abgeleitet bzw. bestimmt.

Zudem ist vorgesehen, dass aus den Positionsinformationen und ergänzend oder alternativ den Abstandsinformationen von zumindest zwei ersten Feldwechselwirkungsmitteln bzw. zwei Feldwechselwirkungspaaren, zumindest eine Rotationsinformation um eine in einer der Messrichtungen orientierte Achse bestimmt wird.

Mit Vorteil wird aus der zumindest einen Rotationsinformation zumindest ein zweiter Qualitätsparameter abgeleitet bzw. bestimmt.

In weiterer Ausgestaltung wird in Abhängigkeit eines ersten Qualitätsparameters und ergänzend oder alternativ in Abhängigkeit eines zweiten Qualitätsparameters ein Fehlersignal ausgegeben und ergänzend oder alternativ ein Optimierungsverfahren vorgenommen.

Die Ausgabe eines Fehlersignals bzw. das Einleiten eines Optimierungsverfahrens kann beispielsweise beim Überschreiten eines vordefinierten Grenzwerts erfolgen.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

Es zeigt:
- Figur 1: eine perspektivische Ansicht einer induktiven Positionsmesseinrichtung umfassend eine erste Baugruppe und eine zweite Baugruppe;
- Figur 2: eine Draufsicht auf eine zweite Baugruppe;
- Figur 3: eine Draufsicht auf ein erstes Ausführungsbeispiel eines ersten Feldwechselwirkungsmittels;
- Figur 4: eine Draufsicht auf ein zweites Ausführungsbeispiel eines ersten Feldwechselwirkungsmittels;
- Figur 5: eine Ansicht einer ersten Wechselwirkungsoberfläche einer ersten Baugruppe;
- Figuren 6a, 6b: eine schematische Darstellung einer induktiven Positionsmesseinrichtung in Draufsicht, bei der eine Relativdrehung einer ersten Baugruppe um die Koordinatenachse der dritten Messrichtung gezeigt ist;
- Figur 7: eine Schnittansicht durch eine induktive Positionsmesseinrichtung mit schematisch visualisierten Erreger- und Empfangssignalen.

### BESCHREIBUNG DER AUSFÜHRUNGSFORMEN

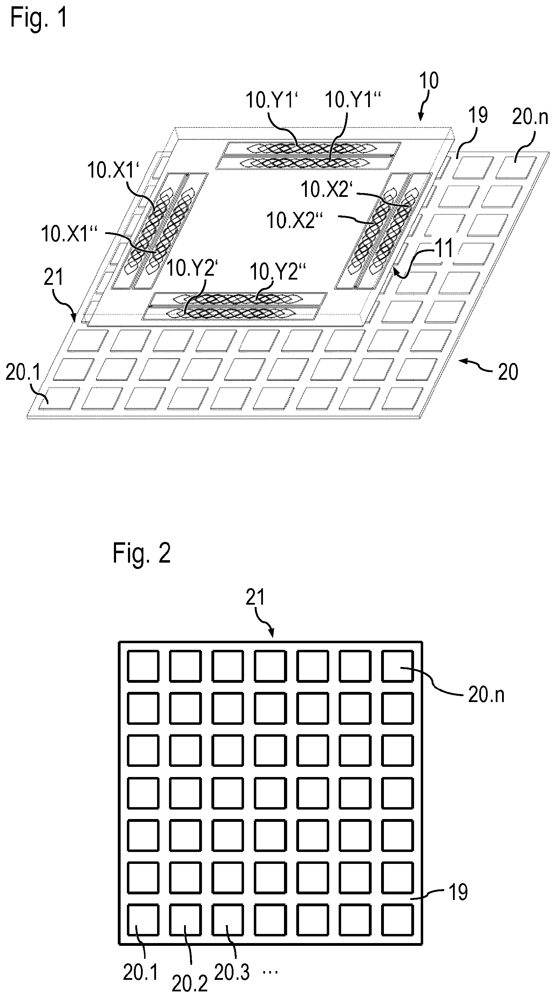

Die induktive Positionsmesseinrichtung 1 des im Folgenden vorgestellten Ausführungsbeispiels weist gemäß der Figur 1 eine erste Baugruppe 10 und eine zweite Baugruppe 20 auf, welche sich in einer dritten Messrichtung z gegenüberliegen und relativ zueinander bewegt werden können. Die erste Baugruppe 10 und die zweite Baugruppe 20 sind zueinander beabstandet angeordnet, so dass zwischen den beiden Baugruppen 10, 20 ein Luftspalt ausgebildet ist.

Die erste Baugruppe 10 umfasst eine erste Wechselwirkungsoberfläche 11 mit mehreren ersten Feldwechselwirkungsmitteln 10.X1', 10.X1", 10.X2', 10.X2", 10.Y1', 10.Y1", 10.Y2', 10.Y2", wobei die ersten Feldwechselwirkungsmittel 10.X1', 10.X1", 10.X2', 10.X2", 10.Y1', 10.Y1", 10.Y2', 10.Y2" parallel zur ersten Wechselwirkungsoberfläche 11 und plan innerhalb dieser angeordnet sind. Die erste Baugruppe 10 wird zum Erzeugen zumindest eines Erregersignals S1 und zum Empfangen zumindest eines Empfangssignals S2 mit elektrischer Energie versorgt. Dies kann beispielsweise über ein Kabel oder drahtlos erfolgen. Die Energiequelle kann beispielsweise eine Batterie innerhalb der ersten Baugruppe 10 sein oder sich außerhalb der ersten Baugruppe 10 befinden.

Die zweite Baugruppe 20 umfasst eine zweite Wechselwirkungsoberfläche 21 mit mehreren zweiten Feldwechselwirkungsmitteln 20.1 bis 20.n. Die zweiten Feldwechselwirkungsmittel 20.1 bis 20.n sind auf oder plan innerhalb der zweiten Wechselwirkungsoberfläche 21 angeordnet und flächig über diese verteilt. Die zweite Baugruppe 20 bildet eigenständig kein eigenes Magnetfeld aus und wird auch nicht aktiv mit elektrischer Energie über Kabel oder dergleichen versorgt, da die zweite Baugruppe 20 rein passiv mit der ersten Baugruppe 10 interagiert.

Die zweite Wechselwirkungsoberfläche 21 der zweiten Baugruppe 20 ist in der Regel größer ausgebildet als die erste Wechselwirkungsoberfläche 11 der ersten Baugruppe 10, so dass auch bei einer Positionierung der ersten Baugruppe 10 im Randbereich der zweiten Baugruppe 20 stets ein ausreichendes Überlappen zwischen den beiden Baugruppen 10, 20 besteht.

Die beiden Wechselwirkungsoberflächen 11, 21 sind gegenüberliegend angeordnet und so beabstandet, dass eine Positionsbestimmung durch ein elektromagnetisches Wechselwirken zwischen den ersten und zweiten Feldwechselwirkungsmitteln 10.X1', 10.X1", 10.X2', 10.X2", 10.Y1', 10.Y1", 10.Y2', 10.Y2" bzw. 20.1 bis 20.n möglich ist. Dies ist insbesondere dann gegeben, wenn sich die ersten und zweiten Feldwechselwirkungsmittel 10.X1', 10.X1", 10.X2', 10.X2", 10.Y1', 10.Y1", 10.Y2', 10.Y2" bzw. 20.1 bis 20.n in der dritten Messrichtung z betrachteten Draufsicht zumindest teilweise überlappen.

Während des Betreibens der induktiven Positionsmesseinrichtung 1 können sich die Position und die Ausrichtung der Baugruppen 10, 20 zueinander relativ in den drei Messrichtungen x, y, z ändern. Vorteilhafterweise liegen die drei Messrichtungen x, y, z orthogonal zueinander. Durch das elektromagnetische Wechselwirken der ersten Feldwechselwirkungsmittel 10.X1', 10.X1", 10.X2', 10.X2", 10.Y1', 10.Y1", 10.Y2', 10.Y2" mit den zweiten Feldwechselwirkungsmitteln 20.1 bis 20.n wird die aktuelle Position und Ausrichtung in sechs Freiheitsgraden durch die induktive Positionsmesseinrichtung 1 bestimmt und ausgewertet. Für die Auswertung der Position und Ausrichtung der ersten Baugruppe 10 kann eine Auswerteeinrichtung innerhalb oder außerhalb der ersten Baugruppe 10 vorgesehen sein. Ein Übertragen der Daten kann beispielsweise kabelgebunden oder alternativ auch drahtlos erfolgen.

Bevorzugt ist eine der Baugruppen unbewegt und stationär, während die andere Baugruppe frei bewegbar ist. Insbesondere wenn die zweite Wechselwirkungsoberfläche 21 der zweiten Baugruppe 20 um ein Vielfaches größer ist als die erste Wechselwirkungsoberfläche 11 der ersten Baugruppe 10, ist eine unbewegte und stationäre Anordnung der zweiten Baugruppe 20 sinnvoll. Alternativ kann aber auch die erste Baugruppe 10 unbewegt und stationär angeordnet sein und die zweite Baugruppe 20 relativ zur ersten Baugruppe 10 bewegt werden. Dies ist beispielsweise dann sinnvoll, wenn eine Versorgung der bewegten Baugruppe mit elektrischer Energie nicht möglich ist.

Figur 2 zeigt eine bevorzugte Ausgestaltung der zweiten Wechselwirkungsoberfläche 21 der zweiten Baugruppe 20. Die zweite Wechselwirkungsoberfläche 21 kann weitestgehend eine beliebige Topografie aufweisen bzw. beliebig gekrümmt sein, wobei sie vorzugsweise eben ausgebildet ist.

Bei der zweiten Wechselwirkungsoberfläche 21 handelt es sich vorzugsweise um die Oberfläche einer Leiterplatte, die durch ein Verfahren der Dünnschichttechnik und ergänzend oder alternativ der Dickschichttechnik hergestellt ist. Die Leiterplatte umfasst ein elektrisch isolierendes Grundmaterial 19, beispielsweise ein faserverstärktes Epoxidharz. Auf das Grundmaterial 19 der Leiterplatte ist eine elektrisch leitfähige Schicht, insbesondere aus Kupfer, aufgebracht, welche so strukturiert ist, dass mehrere zweite Wechselwirkungsmittel 20.1 bis 20.n ausgebildet sind.

Alternativ können die einzelnen zweiten Feldwechselwirkungsmittel 20.1 bis 20.n und die zweite Wechselwirkungsoberfläche 21 auch aus einem Substrat ausgebildet sein. Insbesondere kann es sich hierbei um ein Metallsubstrat handeln, bei dem die einzelnen zweiten Feldwechselwirkungsmittel 20.1 bis 20.n in Form von Erhöhungen ausgebildet sind, wobei zwischen den einzelnen zweiten Feldwechselwirkungsmitteln 20.1 bis 20.n kein Metallsubstrat vorhanden ist. Die Bereiche zwischen den einzelnen zweiten Feldwechselwirkungsmitteln 20.1 bis 20.n können entweder als Leerraum bzw. Luftspalt ausgebildet sein oder beispielsweise mit einem Epoxidharz gefüllt sein, so dass eine plane Oberfläche ausgebildet ist.

Die zweiten Feldwechselwirkungsmittel 20.1 bis 20.n sind in Form eines viereckigen Rasters über die zweite Wechselwirkungsoberfläche 21 verteilt angeordnet und besitzen einen definierten Abstand zueinander. Die Spalten und Zeilen aus den zweiten Feldwechselwirkungsmitteln 20.1 bis 20.n des Rasters sind entlang der orthogonal verlaufenden ersten und zweiten Messrichtung x, y angeordnet. Alle zweiten Feldwechselwirkungsmittel 20.1 bis 20.n sind identisch dimensioniert ausgebildet, insbesondere in Form von Quadraten. Jedoch sind auch andere Formen denkbar, beispielsweise Kreise, Rechtecke, Spiralen, etc.

Das Raster kann, wie in Figur 2 dargestellt, vollständig mit zweiten Feldwechselwirkungsmitteln 20.1 bis 20.n befüllt sein, so dass die zweiten Feldwechselwirkungsmittel 20.1 bis 20.n rasterartig gleichverteilt sind. Alternativ können die zweiten Feldwechselwirkungsmittel 20.1 bis 20.n auch ungleich über die zweite Wechselwirkungsoberfläche 21 verteilt sein, so dass das Raster einzelne Stellen oder Bereiche, ohne zweite Feldwechselwirkungsmittel 20.1 bis 20.n umfasst.

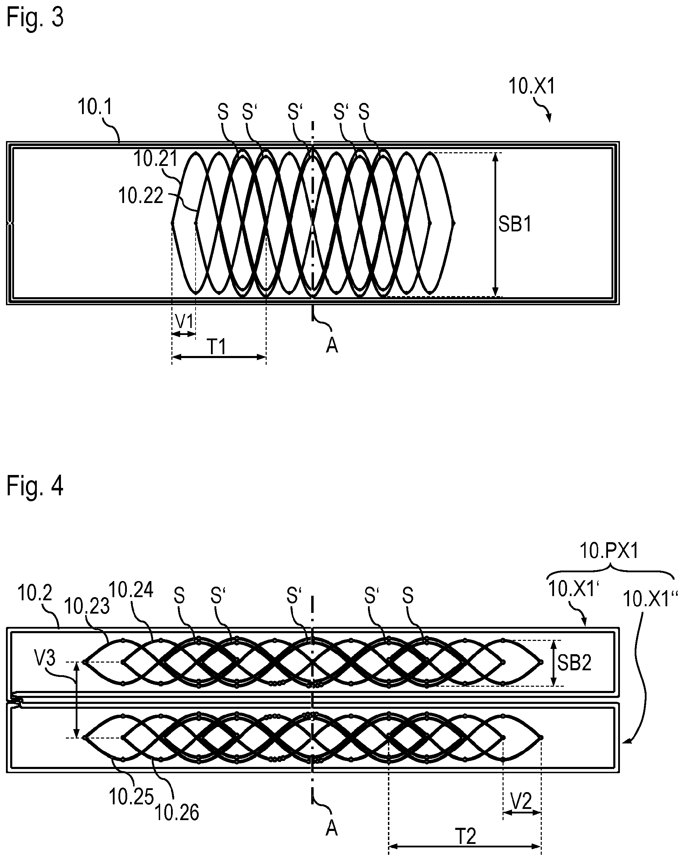

Figur 3 zeigt ein erstes Ausführungsbeispiel der ersten Feldwechselwirkungsmittel 10.X1, 10.X2, 10.Y1, 10.Y2. Das dargestellte erste Feldwechselwirkungsmittel 10.X1 ist ein länglicher Linearsensor umfassend ein planares Erregermittel 10.1 zum Erzeugen elektromagnetischer Felder und zwei planare Empfangsmittel 10.21, 10.22 zum Empfangen elektromagnetischer Felder.

Das erste Empfangsmittel 10.21 ist als Empfängerleiterbahn ausgebildet und setzt sich aus mehreren Leiterbahnabschnitten zusammen. Der grundlegende Verlauf des ersten Empfangsmittels 10.21 ähnelt konstruktiv einem sinusförmigen Verlauf, wobei die Größe der einzelnen Leiterbahn-Amplituden konstruktiv nicht unbedingt konstant ist. Zwei angrenzende Leiterbahn-Amplituden des grundlegenden Verlaufs - bestehend aus einer positiven und einer negativen Leiterbahn-Amplitude - besitzen eine Periodenlänge T1 und eine Schwingungsbreite SB1.

Das erste Empfangsmittel 10.21 ist unterteilbar in einen hinführenden und einen rückführenden Abschnitt. Der hinführende Abschnitt ähnelt in seinem grundlegenden Verlauf dem Funktionsgraphen der Funktion *f*(*x*) *= a ·* sin(*x*) mit $a ∈ {ℝ}^{+}$. Der rückführende Abschnitt ähnelt in seinem grundlegenden Verlauf dem Funktionsgraphen der Funktion *g*(*x*) *= -a ·* sin(*x*) mit $a ∈ {ℝ}^{+}$*.* Das heißt, der rückführende Abschnitt des ersten Empfangsmittels 10.21 entspricht näherungsweise dem an einer Symmetrielinie gespiegelten hinführenden Abschnitt.

Das zweite Empfangsmittel 10.22 ist wie das erste Empfangsmittel 10.21 als Empfängerleiterbahn ausgebildet, jedoch um ein Viertel der Periodenlänge T1 versetzt zum ersten Empfangsmittel 10.21 angeordnet (Versatz V1). Der Versatz V1 erfolgt insbesondere entlang der ersten Messrichtung x oder entlang der zweiten Messrichtung y. Durch die versetzte Anordnung der beiden Empfangsmittel 10.21, 10.22 können entsprechend phasenverschobene Signale generiert werden. Die beiden Empfangsmittel 10.21, 10.22 sind elektrisch so verschaltet, dass diese ein 0°-Signal und ein 90°-Signal liefern.

Die beiden Empfangsmittel 10.21, 10.22 unterscheiden sich in ihrer Länge voneinander. Beispielsweise umfasst das erste Empfangsmittel 10.21 eine Länge von drei Perioden mit jeweils der Periodenlänge T1 und das zweite Empfangsmittel 10.22 eine Länge von zweieinhalb Perioden mit jeweils der Periodenlänge T1.

Unter der Schwingungsbreite SB1 bei den Empfangsmitteln 10.21, 10.22 ist die Höhe der Auslenkung zwischen dem Minimalwert und dem Maximalwert innerhalb einer Periodenlänge T1 zu verstehen. Sie verläuft senkrecht zur Richtung der Periodenlänge T1 bzw. senkrecht zur ersten bzw. zweiten Messrichtung x, y.

Gemäß dem ersten Ausführungsbeispiel der ersten Feldwechselwirkungsmittel 10.X1, 10.X2, 10.Y1, 10.Y2 sind die Schwingungsbreiten SB1 des ersten Empfangsmittels 10.21 und die Schwingungsbreiten SB1 des zweiten Empfangsmittels 10.22 im Mittel gleich ausgebildet und entsprechen mindestens der Periodenlänge T1.

Die in Figur 3 dargestellten Empfangsmittel 10.21, 10.22 besitzen Schwingungsbreiten SB1 die ungefähr dem 1,5-fachen der Periodenlänge T1 entsprechen.

Die beiden Empfangsmittel 10.21, 10.22 werden aus mehreren Leiterbahnabschnitten in unterschiedlichen Lagen eines Trägersubstrats ausgebildet. Einzelheiten zu einem solchen mehrlagigen Aufbau aus Leiterbahnabschnitten sind in der europäischen Patentanmeldung EP23200280 vom 28.09.2023 beschrieben, auf welche insofern ausdrücklich Bezug genommen wird.

Zur Kompensation von Nick-Verkippungen können die Empfangsmittel 10.21, 10.22 stellenweise über zusätzliche Schleifen S, S' verfügen, die ebenfalls aus Leiterbahnabschnitten gebildet werden. Hierzu werden an vorbestimmten Stellen des grundsätzlichen Verlaufs die Schleifen S, S' unterhalb der Leiterbahn-Amplituden platziert. An Stellen mit den zusätzlichen Schleifen S, S' weichen die Leiterbahn-Amplituden der Empfangsmittel 10.21, 10.22 vom grundsätzlichen Verlauf ab und werden um einen vorbestimmten Betrag nach außen, d.h. in Richtung des Erregungsmittels 10.1, verschoben. Die Schleifen S, S' sind bezüglich der Leiterbahn-Amplituden des grundsätzlichen Verlaufs geringfügig nach innen, d.h. in Richtung des virtuellen Nulldurchgangs des grundsätzlichen Verlaufs der Empfangsmittel 10.21, 10.22, verschoben. In Summe ergibt sich bei einer konstruktiv abweichenden Leiterbahn-Amplitude in Kombination mit einer Schleife jedoch ein identisch großes Amplitudensignal, wie bei einer gewöhnlichen Leiterbahn-Amplitude ohne Schleife.

Die Schleifen S, S' sind Teil der Empfängerleiterbahn und werden vorzugsweise derart auf dem ersten Feldwechselwirkungsmittel 10.X1, 10.X2, 10.Y1, 10.Y2 angeordnet, so dass sie spiegelsymmetrisch zu einer Achse A - welche den hinführenden bzw. rückführenden Abschnitt in gleiche Teile unterteilt - angeordnet sind.

Die Schleifen S des ersten Empfangsmittels 10.21 können entweder innerhalb des hinführenden Abschnitts und ergänzend oder alternativ innerhalb des rückführenden Abschnitts der Empfängerleiterbahn ausgebildet sein.

Die Schleifen S' des zweiten Empfangsmittels 10.22 können ebenfalls entweder innerhalb des hinführenden Abschnitts und ergänzend oder alternativ innerhalb des rückführenden Abschnitts der Empfängerleiterbahn ausgebildet sein.

Die beiden Empfangsmittel 10.21, 10.22 sind durch das Erregermittel 10.1 eingefasst, d. h. von allen Seiten umschossen. Das Erregermittel 10.1 ist als Erregerleiterbahn und konstruktiv in Form eines Vierecks ausgebildet. Insbesondere handelt es sich bei dem Viereck um zumindest ein Rechteck.

Gemäß einem zweiten Ausführungsbeispiel der ersten Feldwechselwirkungsmittel 10.X1', 10.X1", 10.X2', 10.X2", 10.Y1', 10.Y1", 10.Y2', 10.Y2" ist deren Anordnung auch zu Feldwechselwirkungspaaren 10.PX1, 10.PX2, 10.PY1, 10.PY2 möglich.

Das in Figur 4 dargestellte Feldwechselwirkungspaar 10.PX1 umfasst das erste Feldwechselwirkungsmittel 10.X1' und das weitere erste Feldwechselwirkungsmittel 10.X1". Die beiden ersten Feldwechselwirkungsmittel 10.X1', 10.X1" sind als längliche Linearsensoren ausgebildet und umfassen gemeinsam ein planares Erregermittel 10.2 (gezeigt in Figur 4) oder alternativ jeweils ein planares Erregermittel zum Erzeugen elektromagnetischer Felder (nicht gezeigt).

Das erste Feldwechselwirkungsmittel 10.X1' umfasst ein planares erstes Empfangsmittel 10.23 und ein planares zweites Empfangsmittel 10.24 zum Empfangen von elektromagnetischen Feldern. Auch das weitere erste Feldwechselwirkungsmittel 10.X' umfasst ein planares erstes Empfangsmittel 10.25 und ein planares zweites Empfangsmittel 10.26 zum Empfangen von elektromagnetischen Feldern.

Die ersten Feldwechselwirkungsmittel 10.X1', 10.X1" sind zueinander beabstandet angeordnet, so dass zwischen den beiden ersten Feldwechselwirkungsmitteln 10.X1', 10.X1" bezüglich den Empfangsmitteln 10.23, 10.24 und den Empfangsmitteln 10.25, 10.26 ein Versatz V3 ausgebildet ist. Der Versatz V3 erfolgt insbesondere entlang der ersten Messrichtung x oder entlang der zweiten Messrichtung y. Vorteilhafterweise entspricht der Versatz V3 einer halben Periodenlänge T2.

Eine Ausgestaltung der ersten Feldwechselwirkungsmittel 10.X1', 10.X1", 10.X2', 10.X2", 10.Y1', 10.Y1", 10.Y2', 10.Y2" gemäß dem zweiten Ausführungsbeispiel und deren Anordnung zu Feldwechselwirkungspaaren 10.PX1, 10.PX2, 10.PY1, 10.PY2 sorgt dafür, dass die Querempfindlichkeit der induktiven Messeinrichtung 1 reduziert wird. Insbesondere wird hierbei die Querempfindlichkeit senkrecht zur Messrichtung x bzw. zur Messrichtung y reduziert.

Die ersten Empfangsmittel 10.23, 10.25 sind als Empfängerleiterbahnen ausgebildet und setzt sich aus mehreren Leierbahnabschnitten zusammen. Der grundlegende Verlauf der ersten Empfangsmittel 10.23, 10.25 ähneln jeweils einem sinusförmigen Verlauf, wobei die Größe der einzelnen Leiterbahn-Amplituden konstruktiv nicht unbedingt konstant ist. Zwei angrenzende Leiterbahn-Amplituden des grundlegenden Verlaufs - bestehend aus einer positiven und einer negativen Leiterbahn-Amplitude - besitzen eine Periodenlänge T2 und eine Schwingungsbreite SB2.

Die ersten Empfangsmittel 10.23, 10.25 sind jeweils unterteilbar in einen hinführenden und einen rückführenden Abschnitt. Ein hinführender Abschnitt ähnelt in seinem grundlegenden Verlauf dem Funktionsgraphen der Funktion *f*(*x*) *= a ·* sin(*x*) mit $a ∈ {ℝ}^{+}$*.* Ein rückführender Abschnitt ähnelt in seinem grundlegenden Verlauf dem Funktionsgraphen der Funktion *g*(*x*) *= -a ·* sin(*x*) mit $a ∈ {ℝ}^{+}$. Das heißt, ein rückführender Abschnitt der ersten Empfangsmittel 10.23, 10.25 entspricht näherungsweise einem an einer Symmetrielinie gespiegelten hinführenden Abschnitt.

Die zweiten Empfangsmittel 10.24, 10.26 sind wie die ersten Empfangsmittel 10.23, 10.25 als Empfängerleiterbahn ausgebildet, jedoch um ein Viertel der Periodenlänge T2 versetzt zum zugehörigen ersten Empfangsmittel 10.23, 10.25 angeordnet (Versatz V2). Der Versatz V2 erfolgt insbesondere entlang der ersten Messrichtung x oder entlang der zweiten Messrichtung y. Durch die versetzte Anordnung der beiden Empfangsmittel 10.23, 10.25 bzw. der beiden Empfangsmittel 10.24, 10.26 können entsprechend phasenverschobene Signale generiert werden. Die beiden Empfangsmittel 10.24, 10.26 bzw. die beiden Empfangsmittel 10.24, 10.26 sind elektrisch so verschaltet, dass diese ein 0°-Signal und ein 90°-Signal liefern.

Die beiden Empfangsmittel 10.23, 10.25 unterscheiden sich in ihrer Länge voneinander. Beispielsweise umfasst das erste Empfangsmittel 10.23 eine Länge von drei Perioden mit jeweils der Periodenlänge T2 und das zweite Empfangsmittel 10.25 eine Länge von zweieinhalb Perioden mit jeweils der Periodenlänge T2.

Bei einer Ausgestaltung der ersten Feldwechselwirkungsmittel 10.X1', 10.X1", 10.X2', 10.X2", 10.Y1', 10.Y1", 10.Y2', 10.Y2" gemäß dem zweiten Ausführungsbeispiel ist das erste Empfangsmittel 10.23 des ersten Feldwechselwirkungsmittels 10.X1' in Serie geschaltet mit dem ersten Empfangsmittel 10.25 des weiteren ersten Feldwechselwirkungsmittels 10.X1". Zudem ist das zweite Empfangsmittel 10.24 des ersten Feldwechselwirkungsmittels 10.X1' in Serie geschaltet mit dem zweiten Empfangsmittel 10.26 des weiteren ersten Feldwechselwirkungsmittels 10.X". Durch diese serielle Verschaltung ergibt sich im Ergebnis jeweils ein 0°-Signal und ein 90°-Signal mit erhöhten Signalamplituden.

Unter der Schwingungsbreite SB2 bei den Empfangsmitteln 10.23, 10.25, 10.24, 10.26 ist die Höhe der Auslenkung zwischen dem Minimalwert und dem Maximalwert innerhalb einer Periodenlänge T2 zu verstehen. Sie verläuft senkrecht zur Richtung der Periodenlänge T2 bzw. senkrecht zur ersten bzw. zweiten Messrichtung x, y.

Gemäß dem zweiten Ausführungsbeispiel der ersten Feldwechselwirkungsmittel 10.X1', 10.X1", 10.X2', 10.X2", 10.Y1', 10.Y1", 10.Y2', 10.Y2" sind die Schwingungsbreiten SB2 eines ersten Empfangsmittels 10.23, 10.25 und die Schwingungsbreite SB2 eines zugehörigen zweiten Empfangsmittels 10.24, 10.26 im Mittel gleich ausgebildet und entsprechen höchstens der halben Periodenlänge T2.

Die in Figur 3 dargestellten Empfangsmittel 10.23, 10.25, 10.24, 10.26 besitzen Schwingungsbreiten SB2, die ungefähr einem Drittel der Periodenlänge T2 entsprechen.

Die ersten und zweiten Empfangsmittel 10.23, 10.25, 10.24, 10.26 werden ebenso wie im ersten Ausführungsbeispiel aus mehreren Leiterbahnabschnitten in unterschiedlichen Lagen eines Substrats ausgebildet.

Zur Kompensation von Nick-Verkippungen können die Empfangsmittel 10.23, 10.25, 10.24, 10.26 ebenfalls stellenweise über zusätzliche Schleifen S, S' verfügen, die aus Leiterbahnabschnitten gebildet werden. Hierzu werden an vorbestimmten Stellen des grundsätzlichen Verlaufs die Schleifen S, S' unterhalb der Leiterbahn-Amplituden platziert. An Stellen mit den zusätzlichen Schleifen S, S' weichen die Leiterbahn-Amplituden der Empfangsmittel 10.21, 10.22 vom grundsätzlichen Verlauf ab und werden um einen vorbestimmten Betrag nach außen, d.h. in Richtung des Erregungsmittels 10.1, verschoben. Die Schleifen S, S' sind bezüglich der Leiterbahn-Amplituden des grundsätzlichen Verlaufs geringfügig nach innen, d.h. in Richtung des virtuellen Nulldurchgangs des grundsätzlichen Verlaufs der Empfangsmittel 10.23, 10.25, 10.24, 10.26, verschoben. In Summe ergibt sich bei einer konstruktiv abweichenden Leiterbahn-Amplitude mit einer Schleife jedoch ein identisch großes Amplitudensignal, wie bei einer gewöhnlichen Leiterbahn-Amplitude ohne Schleife.

Die Schleifen S, S' sind Teil einer Empfängerleiterbahn und werden vorzugsweise auf den beiden ersten Feldwechselwirkungsmitteln 10.X1', 10.X1" derart angeordnet, dass sie spiegelsymmetrisch zu einer Achse A angeordnet sind, welche einen hinführenden bzw. rückführenden Abschnitt in gleiche Teile unterteilt.

Die Schleifen S der ersten Empfangsmittel 10.23, 10.25 können entweder innerhalb eines hinführenden Abschnitts und ergänzend oder alternativ innerhalb eines rückführenden Abschnitts der Empfängerleiterbahnen ausgebildet sein.

Die Schleifen S' der zweiten Empfangsmittel 10.24, 10.26 können ebenfalls entweder innerhalb eines hinführenden Abschnitts und ergänzend oder alternativ innerhalb eines rückführenden Abschnitts der Empfängerleiterbahnen ausgebildet sein.

Wie bereits zuvor erläutert, sind die Empfangsmittel 10.23, 10.25, 10.24, 10.26 entweder von einem gemeinsamen Erregermittel 10.2 oder von mehreren separaten Erregermitteln umgeben, d. h. von allen Seiten umschlossen. Das Erregermittel 10.2 ist als Erregerleiterbahn und konstruktiv in Form zumindest eines Vierecks ausgebildet. Insbesondere handelt es sich bei dem Viereck um zumindest ein Rechteck.

Beispielsweise kann das eine Erregermittel 10.2 zwei Rechtecke ausbilden, jeweils ein Rechteck um die Empfangsmittel 10.23, 10.24 und ein Rechteck um die Empfangsmittel 10.25, 10.26, wie es in Figur 4 dargestellt ist. Alternativ können auch zwei Erregermittel vorgesehen sein, wobei jeweils ein Erregermittel ein Rechteck um die Empfangsmittel 10.23, 10.24 und ein weiteres Erregermittel ein Rechteck um die Empfangsmittel 10.25, 10.26 ausbildet.

Die ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" sind innerhalb der ersten Wechselwirkungsoberfläche 11 der ersten Baugruppe 10 ausgebildet. Bei der erste Wechselwirkungsoberfläche 11 handelt es sich um die Oberfläche einer Leiterplatte, die durch ein Verfahren der Dünnschichttechnik und ergänzend oder alternativ der Dickschichttechnik hergestellt ist. Zum Ausbilden der strukturierten ersten Feldwechselwirkungsmittel 10.X1, 10.X1', 10.X1", 10.X2, 10.X2', 10.X2", 10.Y1, 10.Y1', 10.Y1", 10.Y2, 10.Y2', 10.Y2" können mehrere gesonderte übereinander liegende und elektrisch leitfähige Schichten vorgesehen sein, die durch Isolierschichten voneinander getrennt sind. An vordefinierten Stellen, den sogenannten Durchkontaktierungen, besteht eine elektrische Verbindung zwischen den Leiterbahnen der verschiedenen eklektisch leitfähigen Schichten.

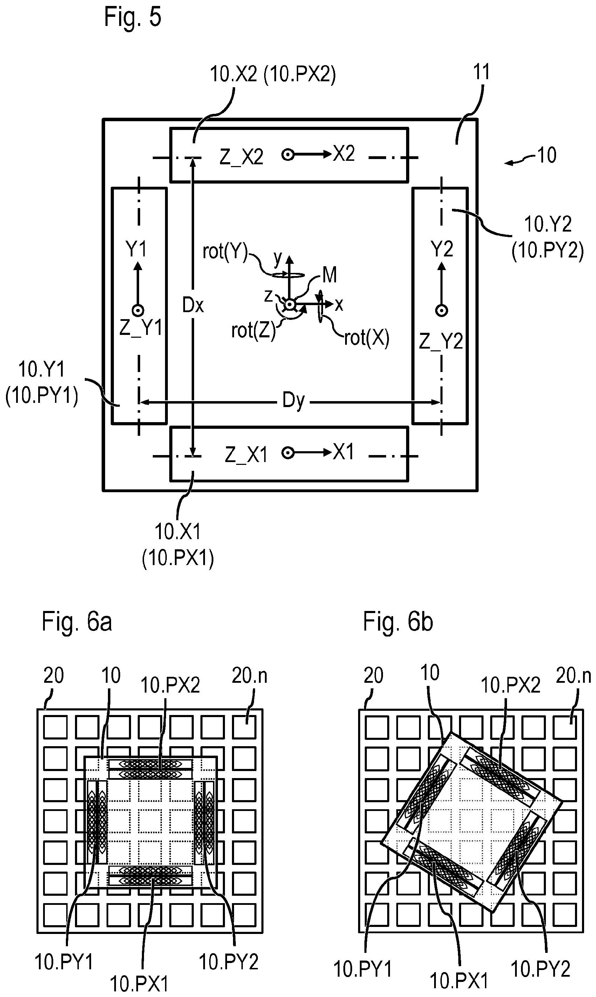

Wie in Figur 5 gezeigt ist, erstrecken sich die beiden ersten Feldwechselwirkungsmittel 10.X1, 10.X2 bzw. die beiden Feldwechselwirkungspaare 10.PX1, 10.PX2 parallel zur ersten Messrichtung x und sind zueinander beabstandet mit einem Abstand Dx angeordnet. Die beiden ersten Feldwechselwirkungsmittel 10.Y1, 10.Y2 bzw. die beiden Feldwechselwirkungspaare 10.PY1, 10.PY2 erstrecken sich parallel zur zweiten Messrichtung y und sind ebenfalls zueinander beabstandet mit einem Abstand Dy angeordnet. Vorteilhafterweise entspricht die Anordnung der ersten Feldwechselwirkungsmittel 10.X1, 10.X2, 10.Y1, 10.Y2 bzw. der Feldwechselwirkungspaare 10.PX1, 10.PX2, 10.PY1, 10.PY2 einer Viereckanordnung, insbesondere in Form eines Quadrats (Dx = Dy).

Durch die beiden in der ersten Messrichtung x bzw. in der zweiten Messrichtung y versetzten Empfangsmittel 10.21, 10.22, 10.23, 10.24, 10.25, 10.26 jedes ersten Feldwechselwirkungsmittels 10.X1, 10.X2, 10.Y1, 10.Y2 bzw. jedes Feldwechselwirkungspaars 10.PX1, 10.PX2, 10.PY1, 10.PY2 liefert jedes Feldwechselwirkungsmittel 10.X1, 10.X2, 10.Y1, 10.Y2 bzw. jedes Feldwechselwirkungspaars 10.PX1, 10.PX2, 10.PY1, 10.PY2 zwei Messgrößen in Form eines 0°-Signals und eines 90°-Signals, so dass insgesamt acht Messgrößen für eine Positionsbestimmung nutzbar sind.

Je erstem Feldwechselwirkungsmittel 10.X1, 10.X2, 10.Y1, 10.Y2 bzw. Feldwechselwirkungspaar 10.PX1, 10.PX2, 10.PY1, 10.PY2 wird aus den 0°- und 90°-Signalen zunächst ein linearer Positionswert X1, X2, Y1, Y2 in der entsprechenden Messrichtung x, y sowie eine Signalamplitude ermittelt. Die Signalamplitude kann dazu verwendet werden, einen Abstandswert Z_X1, Z_X2, Z_Y1, Z_Y2 zu bilden. Der Abstandswert Z_X1, Z_X2, Z_Y1, Z_Y2 eines ersten Feldwechselwirkungsmittels 10.X1, 10.X2, 10.Y1, 10.Y2 bzw. Feldwechselwirkungspaars 10.PX1, 10.PX2, 10.PY1, 10.PY2 quantifiziert den Abstand des entsprechenden Feldwechselwirkungsmittels 10.X1, 10.X2, 10.Y1, 10.Y2 bzw. Feldwechselwirkungspaars 10.PX1, 10.PX2, 10.PY1, 10.PY2 zur zweiten Wechselwirkungsoberfläche 21 der zweiten Baugruppe 20 in der dritten Messrichtung z.

Wie in Figur 5 gezeigt ist, liefert das erste Feldwechselwirkungsmittel 10.X1 bzw. das Feldwechselwirkungspaar 10.PX1 den Positionswert X1 für die erste Messrichtung x und den Abstandswert Z_X1 für die dritte Messrichtung z. Analog hierzu liefert das erste Feldwechselwirkungsmittel 10.X2 bzw. das Feldwechselwirkungspaar 10.PX2 den Positionswert X2 für die erste Messrichtung x und den Abstandswert Z_X2 für die dritte Messrichtung z, das erste Feldwechselwirkungsmittel 10.Y1 bzw. das Feldwechselwirkungspaar 10.PY1 den Positionswert Y1 für die zweite Messrichtung y und den Abstandswert Z_Y1 für die dritte Messrichtung z und das erste Feldwechselwirkungsmittel 10.Y2 bzw. das Feldwechselwirkungspaar 10.PY2 liefert den Positionswert Y2 für die zweite Messrichtung y und den Abstandswert Z_Y2 für die dritte Messrichtung z.

Folglich liefert die induktive Positionsmesseinrichtung 1 während eines Messzyklus jeweils zwei Positionswerte X1, X2 für die erste Messrichtung x, zwei Positionswerte Y1, Y2 für die zweite Messrichtung y und vier Abstandswerte Z_X1, Z_X2, Z_Y1, Z_Y2 für die dritte Messrichtung z.

Auf diese Weise kann die relative Position der ersten Baugruppe 10 zur zweiten Baugruppe 20 in bis zu sechs Freiheitsgraden bestimmt werden. Zusätzlich kann eine Aussage über die Zuverlässigkeit der ermittelten Werte durch das Bestimmen von Qualitätsparameter getroffen werden und gegebenenfalls auf deren Basis weitere Maßnahmen eingeleitet werden.

Die Position des Mittelpunks M der ersten Baugruppe 10 kann beispielsweise über eine Mittelung der Positionswerte X1, X2; Y1, Y2 von zwei in einer identischen Messrichtung x, y verlaufenden ersten Feldwechselwirkungsmitteln 10.X1, 10.X2; 10.Y1, 10.Y2 bzw. Feldwechselwirkungspaaren 10.PX1, 10.PX2; 10.PY1, 10.PY2 bestimmt werden: $\overline{X} = \frac{X 1 + X 2}{2} ,$ wobei X̅ für den Positionswert bezüglich der ersten Messrichtung x des Mittelpunks M der ersten Baugruppe 10 steht; und $\overline{Y} = \frac{Y 1 + Y 2}{2} ,$ wobei Y̅ für den Positionswert bezüglich der zweiten Messrichtung y des Mittelpunks M der ersten Baugruppe 10 steht.

Die Bestimmung des Abstands der ersten Baugruppe 10 zur zweiten Baugruppe 20 kann auf mehrere Arten erfolgen, da jedes erste Feldwechselwirkungsmittel 10.X1, 10.X2, 10.Y1, 10.Y2 bzw. Feldwechselwirkungspaar 10.PX1, 10.PX2, 10.PY1, 10.PY2 zumindest einen Abstandwert Z_X1, Z_X2, Z_Y1, Z_Y2 bereitstellt: $\overline{Z _ X} = \frac{Z _ X 1 + Z _ X 2}{2} ,$ wobei Z̅_̅X̅ für den gemittelten Abstandswert in der dritten Messrichtung z steht, welcher von den in der ersten Messrichtung x verlaufenden ersten Feldwechselwirkungsmitteln 10.X1, 10.X2 bzw. den Feldwechselwirkungspaaren 10.PX1, 10.PX2 stammt, oder $\overline{Z _ Y} = \frac{Z _ Y 1 + Z _ Y 2}{2} ,$ wobei Z̅_̅Y̅ für den gemittelten Abstandswert in der dritten Messrichtung z steht, welcher von den in der zweiten Messrichtung y verlaufenden ersten Feldwechselwirkungsmitteln 10.Y1, 10.Y2 bzw. den Feldwechselwirkungspaaren 10.PY1, 10.PY2 stammt.

Als Ausgabewert für den mittlernen Abstand - d.h. den Abstand im Mittelpunkt M - der ersten Baugruppe 10 bezüglich der zweiten Baugruppe 20 kann der Mittelwert aus den beiden gemittelten Abstandswerten Z̅_̅X̅, Z̅_̅Y̅ bestimmt werden: $\overline{Z} = \frac{\overline{Z _ X} + \overline{Z _ Y}}{2} ,$ wobei Z̅ für den mittleren Abstand im Mittelpunkt M der ersten Baugruppe 10 bezüglich der zweiten Baugruppe 20 steht.

Eine Abweichung zwischen den beiden gemittelten Abstandswerten Z̅_̅X̅, Z̅_̅Y̅ kann genutzt werden, um eine Aussage über die Qualität der Messergebnisse in der dritten Messrichtung z zu treffen: $D _ Z = \overline{Z _ X} - \overline{Z _ Y} ,$ wobei D_Z für einen ersten Qualitätsparameter steht, mittels welchem eine Aussage über die Qualität der Messergebnisse in der dritten Messrichtung z getroffen werden kann.

Die Figuren 6a und 6b zeigen eine schematische Darstellung der induktiven Positionsmesseinrichtung 1 in Draufsicht, wobei bei der ersten Baugruppe 10 nur die erste Wechselwirkungsoberfläche 11 mit mehreren paarweise angeordneten ersten Feldwechselwirkungsmitteln 10.X1', 10.X1", 10.X2', 10.X2", 10.Y1', 10.Y1", 10.Y2', 10.Y2" gezeigt ist. Die erste und zweite Baugruppe 10, 20 sind gegenüberliegend und in zwei parallelen Ebenen angeordnet, so dass ein Luftspalt zwischen der ersten und zweiten Baugruppe 10, 20 ausgebildet ist. Die erste Baugruppe 10 befindet sich in Figur 6a in einer ersten Position. Figur 6b zeigt die erste Baugruppe 10 aus Figur 6a, wobei diese nun ausgelenkt ist und eine zweite Position eingenommen hat. Beim Übergang von der ersten in die zweite Position ist durch die erste Baugruppe 10 eine Relativrotation um die Koordinatenachse der dritten Messrichtung z vollzogen worden. Die zweite Baugruppe 20 ist dabei unbewegt und stationär geblieben. Die induktive Positionsmesseinrichtung 1 ist in der Lage, eine oder mehrere Relativrotationen der ersten Baugruppe 10 in den drei Messrichtungen x, y, z zu bestimmen und auszuwerten.

Bei der Bestimmung der relativen Position der ersten Baugruppe 10 zur zweiten Baugruppe 20 kann beispielsweise eine relative Rotation um die Koordinatenachse in der ersten Messrichtung x wie folgt bestimmt werden: $rot \left(X\right) = arcsin \left(\frac{Z_X 2 - Z_X 1}{Dx}\right) ,$ wobei rot(X) einen Rotationswert um die Koordinatenachse der ersten Messrichtung x quantifiziert und Dx den Abstand zwischen den beiden ersten Feldwechselwirkungsmitteln 10.X1, 10.X2 bzw. Feldwechselwirkungspaaren 10.PX1, 10.PX2, welche die lineare Position in der ersten Messrichtung x messen.

Auf vergleichbare Weise kann auch eine relative Rotation um die Koordinatenachse der zweiten Messrichtung y bestimmt werden: $rot \left(Y\right) = arcsin \left(\frac{Z_Y 1 - Z_Y 2}{Dy}\right) ,$ wobei rot(Y) einen Rotationswert um die Koordinatenachse der zweiten Messrichtung y quantifiziert und Dy den Abstand zwischen den beiden ersten Feldwechselwirkungsmitteln 10.Y1, 10.Y2 bzw. Feldwechselwirkungspaaren 10.PY1, 10.PY2, welche die lineare Position in der zweiten Messrichtung y messen.

Die Berechnung einer Rotation um die Koordinatenachse der dritten Messrichtung z kann entweder über die Gleichung $rot \left(Z_X\right) = arcsin \left(\frac{X 1 - X 2}{Dx}\right)$ erfolgen, wobei rot(Z_X) einen Rotationswert um die Koordinatenachse der dritten Messrichtung z auf Basis der Positionswerte X1, X2 bezeichnet und Dx den Abstand zwischen den beiden ersten Feldwechselwirkungsmitteln 10.X1, 10.X2 bzw. Feldwechselwirkungspaaren 10.PX1, 10.PX2, welche die lineare Position in der ersten Messrichtung x messen, oder alternativ über die Gleichung $rot \left(Z_Y\right) = arcsin \left(\frac{Y 2 - Y 1}{Dy}\right) ,$ wobei rot(Z_Y) einen Rotationswert um die Koordinatenachse der dritten Messrichtung z auf Basis der Positionswerte Y1, Y2 bezeichnet und Dy den Abstand zwischen den beiden ersten Feldwechselwirkungsmitteln 10.Y1, 10.Y2 bzw. den Feldwechselwirkungspaaren 10.PY1, 10.PY2, welche die lineare Position in der zweiten Messrichtung y messen.

Da die voneinander unabhängigen Rotationswerte rot(Z_X), rot(Z_Y) redundant sind, können diese genutzt werden, um den Mittelwert der Rotation um die Koordinatenachse der dritten Messrichtung z zu bestimmen $\overline{rot \left(Z\right)} = \frac{rot \left(Z_X\right) + rot \left(Z_Y\right)}{2} ,$ wobei mit r̅o̅t̅(̅Z̅)̅ der Mittelwert der Rotation um die Koordinatenachse der dritten Messrichtung z ist.

Durch Bilden der Differenz aus den beiden unabhängigen Rotationswerten rot(Z_X), rot(Z_Y) kann ein Qualitätsparameter D_rot(Z) quantifiziert werden, welcher als Information über die Zuverlässigkeit der Messerwerte in der ersten und zweiten Messrichtung x, y herangezogen werden kann $D_rot \left(Z\right) = rot \left(Z_X\right) - rot \left(Z_Y\right) ,$ wobei D_rot(Z) für einen zweiten Qualitätsparameter steht, mittels welchem eine Aussage über die Zuverlässigkeit der Rotationswerte in der dritten Messrichtung z getroffen werden kann.

Der induktiven Positionsmesseinrichtung 1 stehen somit neben den Positionswerten X1, X2, Y1, Y2, den Mittelwerten X̅, Y̅, Z̅, Z̅_̅X̅, Z̅_̅Y̅, r̅o̅t̅(̅Z̅)̅, den Abstandswerten Z_X1, Z_X2, Z_Y1, Z_Y2 und den Rotationswerten rot(X), rot(Y), rot(Z_X), rot(Z_Y) innerhalb eines Messzyklus zusätzlich die beiden Qualitätsparameter D_Z und D_rot(Z) zur Verfügung. Je kleiner die Werte dieser Qualitätsparameter sind, desto genauer sind die Messergebnisse der induktiven Positionsmesseinrichtung 1 bzw. desto besser kann den Positions- und Abstandswerten vertraut werden.

Die Qualitätsparameter D_Z und D_rot(Z) können beispielsweise genutzt werden, um ein Fehlersignal auszugeben, falls einer der Qualitätsparameter D_Z, D_rot(Z) einen vordefinierten Schwellenwert überschreitet. Ergänzend oder alternativ kann das Überschreiten eines Schwellwertes dazu führen, dass ein Optimierungsverfahren eingeleitet wird, mit dessen Hilfe die Querempfindlichkeit der einzelnen ersten Feldwechselwirkungsmittel 10.X1, 10.X2, 10.Y1, 10.Y2, bzw. Feldwechselwirkungspaare 10.PX1, 10.PX2, 10.PY1, 10.PY2 korrigiert wird.

Wie in den Figuren 6a und 6b schematisch gezeigt ist, erfolgt eine Positionsbestimmung vorzugsweise auf Basis jener Feldwechselwirkungspaare 10.PX1, 10.PX2, 10.PY1, 10.PY2, bei denen sich eine ausreichend starke Kopplung ausbildet, d. h. für jene Feldwechselwirkungspaare 10.PX1, 10.PX2, 10.PY1, 10.PY2 und zweite Feldwechselwirkungsmittel 20.1 bis 20.n, die sich bei einer in der dritten Messrichtung z betrachteten Draufsicht zumindest teilweise überlagern. Vorteilhafterweise sind die ersten Feldwechselwirkungsmittel 10.X1', 10.X1", 10.X2', 10.X2", 10.Y1', 10.Y1", 10.Y2', 10.Y2" jeweils größer ausgebildet als die zweiten Feldwechselwirkungsmittel 20.1 bis 20.n, so dass stets mehrere zweite Feldwechselwirkungsmittel 20.1 bis 20.n von zumindest einem ersten Feldwechselwirkungsmittel 10.X1', 10.X1", 10.X2', 10.X2", 10.Y1', 10.Y1", 10.Y2', 10.Y2" überlagert sind. Dabei überlagern insbesondere die Empfangsmittel 10.23, 10.24, 10.25, 10.26 der ersten Feldwechselwirkungsmittel 10.X1', 10.X1", 10.X2', 10.X2", 10.Y1', 10.Y1", 10.Y2', 10.Y2" mehrere zweite Feldwechselwirkungsmittel 20.1 bis 20.n.

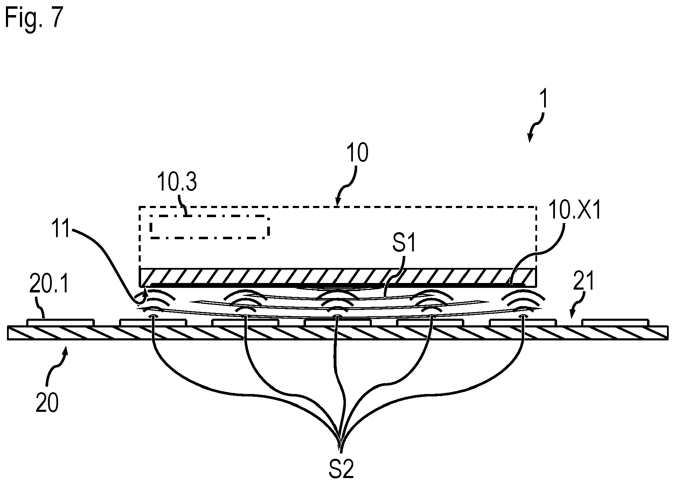

Figur 7 zeigt schematisch einen Querschnitt durch die erste und zweite Baugruppe 10, 20 der induktiven Positionsmesseinrichtung 1.

Die erste Baugruppe 10 umfasst eine Auswerteelektronik 10.3, welche jedes einzelne Feldwechselwirkungsmittel 10.X1, 10.X2, 10.Y1, 10.Y2 bzw. jedes einzelne Feldwechselwirkungspaar 10.PX1, 10.PX2, 10.PY1, 10.PY2 individuell mit einem vorbestimmten Erregersignal S1 beaufschlagt. Insbesondere erfolgt beim Beaufschlagen eines ersten Feldwechselwirkungsmittels 10.X1, 10.X2, 10.Y1, 10.Y2 bzw. Feldwechselwirkungspaars 10.PX1, 10.PX2, 10.PY1, 10.PY2 ein Aussenden des Erregersignals S1 durch zumindest ein Erregermittel 10.1 in Form eines elektromagnetischen Felds bzw. einer oder mehrerer elektromagnetischer Wellen. Das Erregersignal S1 wird von der ersten Baugruppe 10 in Richtung der zweiten Baugruppe 20 ausgesendet und trifft auf zumindest ein und vorzugweise auf mehrere zweite Feldwechselwirkungsmittel 20.1 bis 20.n. Das Erregersignal S1 wird an dem/den zweiten Feldwechselwirkungsmittel/Feldwechselwirkungsmitteln 20.1 bis 20.n moduliert und in Form zumindest eines Empfangssignals S2 von der zweiten Baugruppe 20 zurück an die erste Baugruppe 10 in Form eines elektromagnetischen Felds bzw. einer oder mehrerer elektromagnetischer Wellen emittiert.

Das Empfangssignal S2 wird anschließend durch zumindest ein erstes Feldwechselwirkungsmittel 10.X1, 10.X2, 10.Y1, 10.Y2 bzw. Feldwechselwirkungspaars 10.PX1, 10.PX2, 10.PY1, 10.PY2 detektiert und eine Signalauswertung durch die Auswerteelektronik 10.3 durchgeführt.

Die Auswerteelektronik 10.3 kann beispielsweise einen Microcontroller, einen Schwingkreis, einen ASIC und mehrere Multiplexer umfassen.

Die durch die Signalauswertung ermittelten Positionswerte X1, X2, Y1, Y2 und Abstandswerte Z_X1, Z_X2, Z_Y1, Z_Y2 werden genutzt, um die zuvor beschriebenen Mittelwerte, Rotationswerte und Qualitätsparameter zu bestimmen.

Vorteilhafterweise erfolgt die Modulation des Erregersignals S1 innerhalb der zweiten Feldwechselwirkungsmittel 20.1 bis 20.n indem Wirbelströme ausgebildet werden.

Vorzugsweise ist jedes zweite Feldwechselwirkungsmittel 20.1 bis 20.n konstruktiv gleich ausgebildet und alle zweiten Feldwechselwirkungsmittel 20.1 bis 20.n sind in einem Raster äquidistant zueinander beabstandet angeordnet.

Die Positionsbestimmung erfolgt innerhalb eines vordefinierten Messbereichs gemäß einem absoluten Messverfahren. Der Messbereich ist abhängig von der Länge der ersten Feldwechselwirkungsmittel 10.X1, 10.X2, 10.Y1, 10.Y2; 10.X1', 10.X1", 10.X2', 10.X2", 10.Y1', 10.Y1", 10.Y2', 10.Y2" in der entsprechenden Messrichtung x, y bzw. von den resultierenden 0°- und 90°-Signalen.

Zu Messbeginn werden die erste und zweite Baugruppe 10, 20 innerhalb des Messbereichs definiert zueinander ausgerichtet, beispielsweise durch eine zentrierte Positionierung der ersten Baugruppe 10 relativ zur zweiten Baugruppe 20 (siehe Figur 6a). Kommt es zur relativen Auslenkung der ersten Baugruppe 10 gegenüber der zweiten Baugruppe 20, kann die absolute Position der ersten Baugruppe innerhalb des Messbereichs bestimmt werden.

Bevorzugt ist die Fläche der zweiten Wechselwirkungsoberfläche 21 kleiner oder gleich der Fläche des Messbereichs.

## Patentansprüche

1. Induktive Positionsmesseinrichtung (1), umfassend eine erste Baugruppe (10) mit einer ersten Wechselwirkungsoberfläche (11) und eine zweite Baugruppe (20) mit einer zweiten Wechselwirkungsoberfläche (21), wobei die Baugruppen (10, 20) in einer dritten Messrichtung (z) einander gegenüberliegend angeordnet und relativ zueinander bewegbar sind,
wobei die zweite Wechselwirkungsoberfläche (21) größer als die erste Wechselwirkungsoberfläche (11) ist,
wobei die erste Baugruppe (10) mehrere erste Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") umfasst, welche parallel zur ersten Wechselwirkungsoberfläche (11) angeordnet sind, wobei die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") jeweils zumindest ein Erregermittel (10.1; 10.2) zum Erzeugen eines elektromagnetischen Felds und zumindest ein Empfangsmittel (10.21, 10.22; 10.23, 10.24, 10.25, 10.26) zum Empfangen eines elektromagnetischen Felds umfassen,
wobei die zweite Baugruppe (20) mehrere zweite Feldwechselwirkungsmittel (20.1 bis 20.n) umfasst, welche flächig verteilt über die zweite Wechselwirkungsoberfläche (21) angeordnet sind,
wobei die ersten und zweiten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2"; 20.1 bis 20.n) in elektromagnetische Wechselwirkung bringbar sind,
**dadurch gekennzeichnet,**
**dass** zumindest ein erstes Feldwechselwirkungsmittel (10.X1, 10.X2; 10.X1', 10.X1", 10.X2', 10.X2") entlang einer ersten Messrichtung (x) angeordnet ist und zumindest ein weiteres erstes Feldwechselwirkungsmittel (10.Y1, 10.Y2; 10.Y1', 10.Y1", 10.Y2', 10.Y2") entlang einer zweiten Messrichtung (y) angeordnet ist.

2. Induktive Positionsmesseinrichtung nach Anspruch 1, **dadurch gekennzeichnet, dass** die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") als längliche Linearsensoren ausgebildet sind und die erste und zweite Messrichtung (x, y) senkrecht zueinander verlaufen.

3. Induktive Positionsmesseinrichtung nach zumindest einem der vorhergehenden Ansprüche, **dadurch gekennzeichnet, dass** die ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2")
• jeweils ein erstes Empfangsmittel (10.21; 10.23, 10.25) und ein zweites Empfangsmittel (10.22; 10.24, 10.26) umfassen, welche einen periodischen Verlauf mit einer konstanten Periodenlänge (T1; T2) aufweisen, wobei die Empfangsmittel (10.21, 10.22; 10.23, 10.24, 10.25, 10.26) in der ersten oder zweiten Messrichtung (x, y) um ein Viertel ihrer Periodenlänge (T1; T2) zueinander versetzt angeordnet sind, und
• jeweils ein Erregermittel (10.1; 10.2) umfassen, welches die beiden Empfangsmittel (10.21, 10.22; 10.23, 10.24, 10.25, 10.26) umgibt.

4. Induktive Positionsmesseinrichtung nach zumindest einem der vorhergehenden Ansprüche, **dadurch gekennzeichnet, dass** die erste Baugruppe (10) vier erste Feldwechselwirkungsmittel (10.X1, 10.X2, 10.Y1, 10.Y2) umfasst, die in der ersten Wechselwirkungsoberfläche (11) und jeweils senkrecht zueinander angeordnet sind.

5. Induktive Positionsmesseinrichtung nach Anspruch 3 und 4, **dadurch gekennzeichnet, dass** die Empfangsmittel (10.21, 10.22) der vier ersten Feldwechselwirkungsmittel (10.X1, 10.X2, 10.Y1, 10.Y2) derart ausgebildet sind, dass diese eine Schwingungsbreite (SB1) aufweisen, die mindestens einer Periodenlänge (T1) entspricht.

6. Induktive Positionsmesseinrichtung nach einem der Ansprüche 1 bis 3, **dadurch gekennzeichnet, dass** die erste Baugruppe (10) acht erste Feldwechselwirkungsmittel (10.X1', 10.X1", 10.X2', 10.X2", 10.Y1', 10.Y1", 10.Y2', 10.Y2") umfasst, die in der ersten Wechselwirkungsoberfläche (11) und zu vier paarweise parallelen Feldwechselwirkungspaaren (10.PX1, 10.PX2, 10.PY1, 10.PY2) angeordnet sind, wobei die vier Feldwechselwirkungsmittelpaare (10.PX1, 10.PX2, 10.PY1, 10.PY2) jeweils senkrecht zueinander angeordnet sind.

7. Induktive Positionsmesseinrichtung nach Anspruch 3 und 6, **dadurch gekennzeichnet,**
• **dass** die ersten Empfangsmittel (10.23, 10.25) von zumindest einem Feldwechselwirkungspaar (10.PX1, 10.PX2, 10.PY1, 10.PY2) gleich ausgebildet sind und seriell verschaltet sind,
• **dass** die zweiten Empfangsmittel (10.24, 10.26) von zumindest einem Feldwechselwirkungspaar (10.PX1, 10.PX2, 10.PY1, 10.PY2) gleich ausgebildet sind und seriell verschaltet sind,
• **dass** die Empfangsmittel (10.23, 10.24, 10.25, 10.26) der Feldwechselwirkungspaare (10.PX1, 10.PX2, 10.PY1, 10.PY2) derart ausgebildet sind, dass diese eine Schwingungsbreite (SB2) aufweisen, die weniger als die Hälfte der Periodenlänge (T2) beträgt,
• **dass** der Abstand (V3) zwischen zwei Empfangsmitteln (10.23, 10.24; 10.25, 10.26) innerhalb zumindest eines Feldwechselwirkungspaars (10.PX1, 10.PX2, 10.PY1, 10.PY2) die Hälfte der Periodenlänge (T2) beträgt.

8. Induktive Positionsmesseinrichtung nach zumindest einem der vorhergehenden Ansprüche, **dadurch gekennzeichnet, dass** die zweite Baugruppe (20) nicht an eine aktive Energieversorgungseinrichtung und Datenverarbeitungseinrichtung angeschlossen ist.

9. Induktive Positionsmesseinrichtung nach zumindest einem der vorhergehenden Ansprüche, **dadurch gekennzeichnet, dass** die zweiten Feldwechselwirkungsmittel (20.1 bis 20.n)
• viereckig, insbesondere quadratisch, ausgebildet sind und
• gleich groß und rasterartig gleichverteilt auf der zweiten Wechselwirkungsoberfläche (21) angeordnet sind.

10. Induktive Positionsmesseinrichtung nach zumindest einem der vorhergehenden Ansprüche, **dadurch gekennzeichnet, dass** die zweiten Feldwechselwirkungsmittel (20.1 bis 20.n) mit einer planaren Technologie, insbesondere durch Dickschichttechnik und/oder Dünnschichttechnik hergestellt sind.

11. Verfahren zum Betreiben einer induktiven Positionsmesseinrichtung nach zumindest einem der vorhergehenden Ansprüche, wobei unter Verwendung wenigstens eines ersten Feldwechselwirkungsmittels (10.X1, 10.X2, 10.Y1, 10.Y2; 10.X1', 10.X1", 10.X2', 10.X2", 10.Y1', 10.Y1", 10.Y2', 10.Y2") ein vorbestimmtes Erregersignal (S1) an die zweite Baugruppe (20) gesendet wird, wobei danach ein an wenigstens einem ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2") anliegendes Empfangssignal (S2) gesondert gemessen wird, wobei durch entsprechende Signalauswertung zumindest eines Empfangssignals (S2) eine lineare Positionsinformation (X1, X2, Y1, Y2) und/oder eine Abstandsinformation (Z_X1, Z_X2, Z_Y1, Z_Y2) des zumindest einen ersten Feldwechselwirkungsmittels (10.X1, 10.X2, 10.Y1, 10.Y2; 10.X1', 10.X1", 10.X2', 10.X2", 10.Y1', 10.Y1", 10.Y2', 10.Y2") bestimmt wird.

12. Verfahren nach Anspruch 11, **dadurch gekennzeichnet, dass** durch die induktive Positionsmesseinrichtung (1) die relative Lage der ersten und zweiten Baugruppe (10, 20) in zumindest vier Freiheitsgraden bestimmt wird.

13. Verfahren nach einem der Ansprüche 11 oder 12, **dadurch gekennzeichnet, dass** aus den Positionsinformationen (X1, X2, Y1, Y2) und/oder Abstandsinformationen (Z_X1, Z_X2, Z_Y1, Z_Y2) der ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2"), welche eine Positionsinformation (X1, X2; Y1, Y2) und/oder Abstandsinformation (Z_X1, Z_X2, Z_Y1, Z_Y2) bezüglich einer identischen Messrichtung (x, y, z) bestimmen, zumindest ein erster Qualitätsparameter abgeleitet wird.

14. Verfahren nach einem der Ansprüche 11 bis 13, **dadurch gekennzeichnet, dass** aus den Positionsinformationen (X1, X2, Y1, Y2) und/oder Abstandsinformationen (Z_X1, Z_X2, Z_Y1, Z_Y2) der ersten Feldwechselwirkungsmittel (10.X1, 10.X2, 10.Y1, 10.Y2; 10.X1', 10.X1", 10.X2', 10.X2", 10.Y1', 10.Y1", 10.Y2', 10.Y2"), zumindest eine Rotationsinformation (rot(X), rot(Y), rot(Z)) um eine in einer der Messrichtungen (x, y, z) orientierten Achse bestimmt wird.

15. Verfahren nach Anspruch 14, **dadurch gekennzeichnet, dass** aus der zumindest einen Rotationsinformation (rot(X), rot(Y), rot(Z)) zumindest ein zweiter Qualitätsparameter abgeleitet wird.

16. Verfahren nach den Ansprüchen 13 und 15, **dadurch gekennzeichnet, dass** in Abhängigkeit des ersten Qualitätsparameters und/oder des zweiten Qualitätsparameters ein Fehlersignal ausgegeben wird und/oder ein Optimierungsverfahren vorgenommen wird.

## Claims

1. Inductive position measuring device (1) comprising a first assembly (10) having a first interaction surface (11) and a second assembly (20) having a second interaction surface (21), wherein the assemblies (10, 20) are arranged opposite each other in a third measuring direction (z) and are movable relative to each other, wherein the second interaction surface (21) is larger than the first interaction surface (11),
wherein the first assembly (10) comprises a plurality of first field interaction means (10.X1, 10.X2, 10.Y1, 10.Y2; 10.X1', 10.X1", 10.X2', 10.X2", 10.Y1', 10.Y1", 10.Y2', 10.Y2") which are arranged parallel to the first interaction surface (11),
wherein the first field interaction means (10.X1, 10.X2, 10.Y1, 10.Y2; 10.X1', 10.X1", 10.X2', 10.X2", 10.Y1', 10.Y1", 10.Y2', 10.Y2") each comprise at least one excitation means (10.1; 10.2) for generating an electromagnetic field and at least one receiving means (10.21, 10.22; 10.23, 10.24, 10.25, 10.26) for receiving an electromagnetic field,
wherein the second assembly (20) comprises a plurality of second field interaction means (20.1 to 20.n) which are arranged so as to be distributed in a two-dimensional manner over the second interaction surface (21),
wherein the first and second field interaction means (10.X1, 10.X2, 10.Y1, 10.Y2; 10.X1', 10.X1", 10.X2', 10.X2", 10.Y1', 10.Y1", 10.Y2', 10.Y2"; 20.1 to 20.n) can be brought into electromagnetic interaction;
**characterized**
**in that** at least one first field interaction means (10.X1, 10.X2; 10.X1', 10.X1", 10.X2', 10.X2") is arranged along a first measuring direction (x) and at least one further first field interaction means (10.Y1, 10.Y2; 10.Y1', 10.Y1", 10.Y2', 10.Y2") is arranged along a second measuring direction (y).

2. Inductive position measuring device according to Claim 1, **characterized in that** the first field interaction means (10.X1, 10.X2, 10.Y1, 10.Y2; 10.X1', 10.X1", 10.X2', 10.X2", 10.Y1', 10.Y1", 10.Y2', 10.Y2") are designed as elongated linear sensors and the first and second measuring directions (x, y) are perpendicular to each other.

3. Inductive position measuring device according to at least one of the preceding claims, **characterized in that** the first field interaction means (10.X1, 10.X2, 10.Y1, 10.Y2; 10.X1', 10.X1", 10.X2', 10.X2", 10.Y1', 10.Y1", 10.Y2', 10.Y2")
• each comprise a first receiving means (10.21; 10.23, 10.25) and a second receiving means (10.22; 10.24, 10.26) which have a periodic profile with a constant period length (T1; T2), wherein the receiving means (10.21, 10.22; 10.23, 10.24, 10.25, 10.26) are arranged so as to be offset with respect to each other by a quarter of their period length (T1; T2) in the first or second measuring direction (x, y), and
• each comprise an excitation means (10.1; 10.2) which surrounds the two receiving means (10.21, 10.22; 10.23, 10.24, 10.25, 10.26).

4. Inductive position measuring device according to at least one of the preceding claims, **characterized in that** the first assembly (10) comprises four first field interaction means (10.X1, 10.X2, 10.Y1, 10.Y2), which are arranged in the first interaction surface (11) and are each arranged perpendicular to each other.

5. Inductive position measuring device according to Claims 3 and 4, **characterized in that** the receiving means (10.21, 10.22) of the four first field interaction means (10.X1, 10.X2, 10.Y1, 10.Y2) are designed such that they have an oscillation range (SB1) which corresponds to at least one period length (T1).

6. Inductive position measuring device according to one of Claims 1 to 3, **characterized in that** the first assembly (10) comprises eight first field interaction means (10.X1', 10.X1", 10.X2', 10.X2", 10.Y1', 10.Y1", 10.Y2', 10.Y2") which are arranged in the first interaction surface (11) and in four pairs of parallel field interaction pairs (10.PX1, 10.PX2, 10.PY1, 10.PY2), wherein the four pairs of field interaction means (10.PX1, 10.PX2, 10.PY1, 10.PY2) are each arranged perpendicular to each other.

7. Inductive position measuring device according to Claims 3 and 6, **characterized**
• **in that** the first receiving means (10.23, 10.25) of at least one field interaction pair (10.PX1, 10.PX2, 10.PY1, 10.PY2) are designed in the same way and are connected in series,
• **in that** the second receiving means (10.24, 10.26) of at least one field interaction pair (10.PX1, 10.PX2, 10.PY1, 10.PY2) are designed in the same way and are connected in series,
• **in that** the receiving means (10.23, 10.24, 10.25, 10.26) of the field interaction pairs (10.PX1, 10.PX2, 10.PY1, 10.PY2) are designed in such a way that they have an oscillation range (SB2) that is less than half the period length (T2),
• **in that** the distance (V3) between two receiving means (10.23, 10.24; 10.25, 10.26) within at least one field interaction pair (10.PX1, 10.PX2, 10.PY1, 10.PY2) is half the period length (T2).

8. Inductive position measuring device according to at least one of the preceding claims, **characterized in that** the second assembly (20) is not connected to an active energy supply device and data processing device.

9. Inductive position measuring device according to at least one of the preceding claims, **characterized in that** the second field interaction means (20.1 to 20.n)
• are rectangular, in particular square, and
• are of the same size and are arranged in a grid-like manner on the second interaction surface (21).

10. Inductive position measuring device according to at least one of the preceding claims, **characterized in that** the second field interaction means (20.1 to 20.n) are produced using a planar technology, in particular by means of thick film technology and/or thin film technology.

11. Method for operating an inductive position measuring device according to at least one of the preceding claims, wherein
a predetermined excitation signal (S1) is sent to the second assembly (20) using at least one first field interaction means (10.X1, 10.X2, 10.Y1, 10.Y2; 10.X1', 10.X1", 10.X2', 10.X2", 10.Y1', 10.Y1", 10.Y2', 10.Y2"), wherein a reception signal (S2) present at at least one first field interaction means (10.X1, 10.X2, 10.Y1, 10.Y2; 10.X1', 10.X1", 10.X2', 10.X2", 10.Y1', 10.Y1", 10.Y2', 10.Y2") is then measured separately, wherein linear position information (X1, X2, Y1, Y2) and/or distance information (Z_X1, Z_X2, Z_Y1, Z_Y2) relating to the at least one first field interaction means (10.X1, 10.X2, 10.Y1, 10.Y2; 10.X1', 10.X1", 10.X2', 10.X2", 10.Y1', 10.Y1", 10.Y2', 10.Y2") is determined by means of appropriate signal evaluation of at least one reception signal (S2).

12. Method according to Claim 11, **characterized in that** the relative position of the first and second assemblies (10, 20) is determined in at least four degrees of freedom by the inductive position measuring device (1).

13. Method according to either of Claims 11 and 12, **characterized in that** at least one first quality parameter is derived from the position information (X1, X2, Y1, Y2) and/or distance information (Z_X1, Z_X2, Z_Y1, Z_Y2) relating to the first field interaction means (10.X1, 10.X2, 10.Y1, 10.Y2; 10.X1', 10.X1", 10.X2', 10.X2", 10.Y1', 10.Y1", 10.Y2', 10.Y2"), which determines position information (X1, X2; Y1, Y2) and/or distance information (Z_X1, Z_X2, Z_Y1, Z_Y2) with respect to an identical measuring direction (x, y, z).

14. Method according to one of Claims 11 to 13, **characterized in that** at least one item of rotation information (rot(X), rot(Y), rot(Z)) around an axis oriented in one of the measuring directions (x, y, z) is determined from the position information (X1, X2, Y1, Y2) and/or distance information (Z_X1, Z_X2, Z_Y1, Z_Y2) relating to the first field interaction means (10.X1, 10.X2, 10.Y1, 10.Y2; 10.X1', 10.X1", 10.X2', 10.X2", 10.Y1', 10.Y1", 10.Y2', 10.Y2").

15. Method according to Claim 14, **characterized in that** at least one second quality parameter is derived from the at least one item of rotation information (rot(X), rot(Y), rot(Z)).

16. Method according to Claims 13 and 15, **characterized in that**, depending on the first quality parameter and/or the second quality parameter, an error signal is output and/or an optimization method is carried out.

## Revendications

1. Dispositif de mesure de position inductif (1) comprenant un premier ensemble (10) présentant une première surface d'interaction (11) et un deuxième ensemble (20) présentant une deuxième surface d'interaction (21), les ensembles (10, 20) étant disposés en vis-à-vis dans une troisième direction de mesure (z) et étant mobiles l'un par rapport à l'autre,
la deuxième surface d'interaction (21) étant plus grande que la première surface d'interaction (11),
le premier ensemble (10) comprenant une pluralité de premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") qui sont disposés parallèlement à la première surface d'interaction (11),
les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") comprenant respectivement au moins un moyen d'excitation (10.1 ; 10.2) destiné à générer un champ électromagnétique et au moins un moyen de réception (10.21, 10.22 ; 10.23, 10.24, 10.25, 10.26) destiné à recevoir un champ électromagnétique,
le deuxième ensemble (20) comprenant une pluralité de deuxièmes moyens d'interaction de champ (20.1 à 20.n) qui sont disposés de manière répartie à plat sur la deuxième surface d'interaction (21),
les premier et deuxième moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2" ; 20.1 à 20.n) pouvant être amenés en interaction électromagnétique, **caractérisé**
**en ce qu'**au moins un premier moyen d'interaction de champ (10.X1, 10.X2 ; 10.X1', 10.X1", 10.X2', 10.X2") est disposé le long d'une première direction de mesure (x) et au moins un autre premier moyen d'interaction de champ (10.Y1, 10.Y2 ; 10.Y1', 10.Y1", 10.Y2', 10.Y2") est disposé le long d'une deuxième direction de mesure (y).

2. Dispositif de mesure de position inductif selon la revendication 1, **caractérisé en ce que** les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2") sont réalisés sous forme de capteurs linéaires allongés et les première et deuxième directions de mesure (x, y) sont perpendiculaires l'une à l'autre.

3. Dispositif de mesure de position inductif selon au moins l'une des revendications précédentes, **caractérisé en ce que** les premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2")
• comprennent respectivement un premier moyen de réception (10.21 ; 10.23, 10.25) et un deuxième moyen de réception (10.22 ; 10.24, 10.26) qui présentent un profil périodique ayant une longueur de période constante (T1 ; T2), les moyens de réception (10.21, 10.22 ; 10.23, 10.24, 10.25, 10.26) étant décalés les uns par rapport aux autres d'un quart de leur longueur de période (T1 ; T2) dans la première ou la deuxième direction de mesure (x, y), et
• comprennent respectivement un moyen d'excitation (10.1 ; 10.2) qui englobe les deux moyens de réception (10.21, 10.22 ; 10.23, 10.24, 10.25, 10.26).

4. Dispositif de mesure de position inductif selon au moins l'une des revendications précédentes, **caractérisé en ce que** le premier ensemble (10) comprend quatre premiers moyens d'interaction de champ (10.X1, 10.X2, 10.Y1, 10.Y2) qui sont disposés dans la première surface d'interaction (11) et respectivement perpendiculairement les uns aux autres.

5. Dispositif de mesure de position inductif selon les revendications 3 et 4, **caractérisé en ce que** les moyens de réception (10.21, 10.22) des quatre premiers moyens d'interaction de champ (10.X1, 10.X2, 10.Y1, 10.Y2) sont conçus de telle sorte que ceux-ci présentent une largeur d'oscillation (SB1) correspondant à au moins une longueur de période (T1).

6. Dispositif de mesure de position inductif selon l'une des revendications 1 à 3, **caractérisé en ce que** le premier ensemble (10) comprend huit premiers moyens d'interaction de champ (10.X1', 10.X1", 10.X2', 10.X2", 10.Y1', 10.Y1", 10.Y2', 10.Y2") qui sont disposés dans la première surface d'interaction (11) et en quatre paires d'interaction de champ (10.PX1, 10.PX2, 10.PY1, 10.PY2) parallèles par paires, les quatre paires de moyens d'interaction de champ (10.PX1, 10.PX2, 10.PY1, 10.PY2) étant disposées respectivement perpendiculairement les unes aux autres.

7. Dispositif de mesure de position inductif selon les revendications 3 et 6, **caractérisé**
• **en ce que** les premiers moyens de réception (10.23, 10.25) d'au moins une paire d'interaction de champ (10.PX1, 10.PX2, 10.PY1, 10.PY2) sont de conception identique et sont connectés en série,
• **en ce que** les deuxièmes moyens de réception (10.24, 10.26) d'au moins une paire d'interaction de champ (10.PX1, 10.PX2, 10.PY1, 10.PY2) sont de conception identique et sont connectés en série,
• **en ce que** les moyens de réception (10.23, 10.24, 10.25, 10.26) des paires d'interaction de champ (10.PX1, 10.PX2, 10.PY1, 10.PY2) sont conçus de manière à présenter une largeur d'oscillation (SB2) inférieure à la moitié de la longueur de période (T2),
• **en ce que** la distance (V3) entre deux moyens de réception (10.23, 10.24 ; 10.25, 10.26) au sein d'au moins une paire d'interaction de champ (10.PX1, 10.PX2, 10.PY1, 10.PY2) est égale à la moitié de la longueur de période (T2).

8. Dispositif de mesure de position inductif selon au moins l'une des revendications précédentes, **caractérisé en ce que** le deuxième ensemble (20) n'est pas relié à un dispositif actif d'alimentation en énergie et de traitement de données.

9. Dispositif de mesure de position inductif selon au moins l'une des revendications précédentes, **caractérisé en ce que** les deuxièmes moyens d'interaction de champ (20.1 à 20.n)
• sont de forme quadrangulaire, en particulier carrée, et
• sont de même taille et sont disposés de manière répartie uniformément selon une grille sur la deuxième surface d'interaction (21).

10. Dispositif de mesure de position inductif selon au moins l'une des revendications précédentes, **caractérisé en ce que** les deuxièmes moyens d'interaction de champ (20.1 à 20.n) sont fabriqués selon une technologie planaire, en particulier par la technique des couches épaisses et/ou la technique des couches minces.

11. Procédé de fonctionnement d'un dispositif de mesure de position inductif selon au moins l'une des revendications précédentes,
dans lequel
par utilisation d'au moins un premier moyen d'interaction de champ (10.X1, 10.X2, 10.Y1, 10.Y2 ; 10.X1', 10.X1", 10.X2', 10.X2", 10.Y1', 10.Y1", 10.Y2', 10.Y2"), un signal d'excitation (S1) prédéterminé est envoyé au deuxième ensemble (20), un signal de réception (S2) présent au niveau d'au moins un premier moyen d'interaction de champ (10.X1, 10.X2, 10.Y1, 10.Y2 ; 10.X1', 10.X1", 10.X2', 10.X2", 10.Y1', 10.Y1", 10.Y2', 10.Y2") étant ensuite mesuré séparément, une information de position linéaire (X1, X2, Y1, Y2) et/ou une information de distance (Z_X1, Z_X2, Z_Y1, Z_Y2) dudit au moins un premier moyen d'interaction de champ (10.X1, 10.X2, 10.Y1, 10.Y2; 10.X1', 10.X1", 10.X2', 10.X2", 10.Y1', 10.Y1", 10.Y2', 10.Y2") étant déterminée par une évaluation de signal correspondante d'au moins un signal de réception (S2).

12. Procédé selon la revendication 11, **caractérisé en ce que** la position relative des premier et deuxième ensembles (10, 20) est déterminée dans au moins quatre degrés de liberté par le dispositif de mesure de position inductif (1).

13. Procédé selon l'une des revendications 11 ou 12, **caractérisé en ce qu'**au moins un premier paramètre de qualité est dérivé à partir des informations de position (X1, X2, Y1, Y2) et/ou des informations de distance (Z_X1, Z_X2, Z_Y1, Z_Y2) des premiers moyens d'interaction de champ (10.X1, 10.X2, 10.Y1, 10.Y2; 10.X1', 10.X1", 10.X2', 10.X2", 10.Y1', 10.Y1", 10.Y2', 10.Y2"), lesquelles déterminent une information de position (X1, X2 ; Y1, Y2) et/ou une information de distance (Z_X1, Z_X2, Z_Y1, Z_Y2) par rapport à une direction de mesure identique (x, y, z).

14. Procédé selon l'une des revendications 11 à 13, **caractérisé en ce qu'**au moins une information de rotation (rot(X), rot(Y), rot(Z)) autour d'un axe orienté dans l'une des directions de mesure (x, y, z) est déterminée à partir des informations de position (X1, X2, Y1, Y2) et/ou des informations de distance (Z_X1, Z_X2, Z_Y1, Z_Y2) des premiers moyens d'interaction de champ (10.X1, 10.X2, 10.Y1, 10.Y2 ; 10.X1', 10.X1", 10.X2', 10.X2", 10.Y1', 10.Y1", 10.Y2', 10.Y2").

15. Procédé selon la revendication 14, **caractérisé en ce qu'**au moins un deuxième paramètre de qualité est dérivé de ladite au moins une information de rotation (rot(X), rot(Y), rot(Z)).

16. Procédé selon les revendications 13 et 15, **caractérisé en ce qu'**un signal d'erreur est délivré et/ou en ce qu'un procédé d'optimisation est mis en œuvre en fonction du premier paramètre de qualité et/ou du deuxième paramètre de qualité.
